# EUROPÄISCHE PATENTSCHRIFT

(11) **EP 1 284 892 B1**
(45) Veröffentlichungstag und Bekanntmachung des Hinweises auf die Patenterteilung: **23.06.2004**
(21) Anmeldenummer: 01943153.5
(22) Anmeldetag: 21.05.2001
(51) Int. Cl.: B60R 21/16

(54) **SCHUTZEINRICHTUNG FÜR EIN KRAFTFAHRZEUG**
PROTECTIVE DEVICE FOR A MOTOR VEHICLE
DISPOSITIF DE PROTECTION POUR AUTOMOBILE

(30) Priorität: 26.05.2000 DE 20009891 U
(43) Veröffentlichungstag der Anmeldung: 26.02.2003
(73) Patentinhaber: Takata-Petri AG, 63743 Aschaffenburg (DE)
(72) Erfinder: ZERBE, Manfred, 63739 Aschaffenburg (DE)
(74) Vertreter: Baumgärtel, Gunnar, Dr.
(86) Internationale Anmeldenummer: PCT/DE2001/001994
(87) Internationale Veröffentlichungsnummer: WO 2001/089884

(56) Entgegenhaltungen:
- EP-A- 0 960 788
- EP-A- 0 967 126

## Beschreibung

Die Erfindung betrifft eine Schutzeinrichtung für ein Kraftfahrzeug nach dem Oberbegriff des Anspruchs 1.

Eine derartige Schutzeinrichtung umfaßt einen Gassack, von dem mindestens ein Abschnitt zum Schutz eines im Innenraum eines Kraftfahrzeuges befindlichen Insassen aufblasbar ist, wobei der aufblasbare Abschnitt des Gassackes durch zwei entlang eines umlaufenden Randes miteinander verbundene Gewebelagen gebildet wird, wobei der Gassack zur Bildung eines Vorhanges neben mindestens einer Fensterscheibe des Kraftfahrzeugs eingerichtet ist, so daß die eine Gewebelage der Fensterscheibe und die andere Gewebelage dem Fahrzeuginnenraum zugewandt ist, und wobei die beiden Gewebelagen zusätzlich außerhalb des umlaufenden Randes miteinander verbunden sind. Ferner umfaßt die Schutzeinrichtung mindestens einen Gasgenerator zum Aufblasen des Gassackes durch Einleiten eines Gasstromes in den mindestens einen aufblasbaren Abschnitt. Diese Schutzvorrichtung dient vor allem zum Schutz des Kopfes eines Fahrzeuginsassen, z.B. bei einem Seitenaufprall oder bei einem Roll-Over.

Aus der DE 198 16 061 A1 ist eine Airbag-Anordnung für ein Kraftfahrzeug bekannt, die einen Airbag umfaßt, der für den Fall, daß ein Unfall auftritt, dazu eingerichtet ist, aufgeblasen zu werden und einen Vorhang zu bilden. Der Airbag besteht aus zwei miteinander verbundenen Gewebelagen, von denen im aufgeblasenen Zustand die eine der seitlichen Fahrzeugkarosserie und die andere dem Fahrzeuginnenraum zugewandt ist. Die beiden Gewebelagen sind nicht nur am Rand zur Bildung eines Airbags in Form eines Gassackes miteinander verbunden, sondern darüber hinaus auch an zusätzlichen Verbindungsstellen, so daß sich längliche, vertikal verlaufende Kammern bilden, entlang derer das Gas aus dem Gasgenerator in den Airbag einströmt.

Eine weitere Airbag-Anordnung, die zur Bildung eines Vorhanges neben einem Fahrzeuginsassen eingerichtet ist und vertikal verlaufende Kammern aufweist, ist aus der WO 96/26087 bekannt.

Die EP-A-0 967 126 offenbart eine Schutzeinrichtung gemäß dem Oberbegriff des Anspruchs 1.

Der Erfindung liegt die Aufgabe zugrunde, eine Schutzeinrichtung für ein Kraftfahrzeug der eingangs genannten Art zu schaffen, die sich bei einem einfachen Aufbau durch einen zuverlässigen Schutz der Fahrzeuginsassen auszeichnet, was insbesondere durch ein geeignetes Einleiten des Gases in den Gassack gewährleistet sein soll.

Diese Aufgabe wird erfindungsgemäß durch die Schaffung einer Schutzeinrichtung für ein Kraftfahrzeug mit den Merkmalen des Anspruchs 1 gelöst.

Danach sind die zusätzlichen Verbindungsstellen, an denen die beiden Gewebelagen des Gassackes miteinander verbunden sind, derart angeordnet und ausgebildet, daß zumindest ein Teil des zum Aufblasen des Gassackes eingeleiteten Gasstromes entlang des umlaufenden Randes geleitet werden kann, an dem die beiden Gewebelagen zur Bildung.eines Gassackes miteinander verbunden sind.

Dadurch, daß die in den aufzublasenden Abschnitt des Gassackes einströmenden Gase entlang des umlaufenden Randes des Abschnittes geleitet werden, wird dieser Gassackabschnitt zunächst entlang seines äußeren Umfanges mit Gas gefüllt und dadurch gestrafft. Im Ergebnis wird eine frühzeitige Straffung des aufzublasenden Abschnittes des Gassackes erreicht, so daß auch der Schutz des Insassen entsprechend frühzeitig einsetzt.

Mit Vorteil wird der Gasstrom entlang einer ringförmigen Bahn geleitet, die nach außen durch den umlaufenden Rand des entsprechenden Abschnittes des Gassackes und nach innen durch die zusätzlichen Verbindungsstellen zwischen den beiden Gewebelagen des Abschnittes begrenzt ist.

Dabei können die zusätzlichen Verbindungsstellen zum einen eine durchgehende, linienartige innere Begrenzung für den Gasstrom bilden. Zum anderen kann vorgesehen sein, daß die zusätzlichen Verbindungsstellen eine innere Begrenzung bilden, die mehrere voneinander beabstandete Abschnitte umfaßt, an denen die beiden Gewebelagen jeweils miteinander verbunden sind.

Nach einer Ausführungsform der Erfindung wird der Gasstrom zumindest teilweise entlang einer im wesentlichen geschlossenen ringförmigen Bahn geleitet. Nach einer anderen Ausführungsform ist die ringförmige Bahn im wesentlichen spiralförmig ausgebildet.

Die beiden Gewebelagen können entlang des umlaufenden Randes des Gassackabschnittes einstückig und/oder über Befestigungsmittel, z.B. über Nähte, miteinander verbunden sein. Wenn die beiden Gewebelagen, die die Hülle des Gassakkes bilden, durch einen einzelnen Gewebezuschnitt gebildet werden, dann sind die beiden Gewebelagen im Bereich einer Umschlagkante einstückig und im Bereich des übrigen Randes über Nähte oder dergleichen miteinander verbunden.

Die zusätzlichen Verbindungsstellen zwischen den beiden Gewebelagen, die den Gasstrom entlang des äußeren Randes des Gassackes leiten sollen, können z.B. durch Nähte oder durch Fangbänder gebildet werden.

In einer bevorzugten Weiterbildung der Erfindung weist der Gassack mehrere voneinander beabstandete aufblasbare Abschnitte auf, die jeweils in erfindungsgemäßer Weise ausgestaltet sein können. Die einzelnen Abschnitte können beispielsweise einem vorderen Seitenfenster, der B-Säule des Kraftfahrzeugs sowie einem hinteren Seitenfenster zugeordnet sein.

Um die Bildung eines seitlichen Vorhanges beim Aufblasen des Gassackes bzw. mindestens eines Abschnittes des Gassackes zu ermöglichen, wird der Gassack vorzugsweise entlang des dachseitigen Randes des Türrahmens des Fahrzeugs befestigt. Der Gasstrom wird dann vorzugsweise von der Dachseite her in den Gassack bzw. den oder die aufblasbaren Abschnitte des Gassackes eingeleitet.

Um sicherzustellen, daß ein hinreichend großer Teil des in den Gassack bzw. den entsprechenden Abschnitt des Gassackes eingeleiteten Gasstromes entlang des umlaufenden äußeren Randes geleitet wird, werden die zusätzlichen Verbindungsstellen derartig ausgebildet und angeordnet, daß eine geradlinige, vertikale Gasströmung vom dachseitigen Randbereich des entsprechenden Gassackabschnittes zum gegenüberliegenden, bodenseitigen Randbereich des Gassackabschnittes nur in einem kleinen Teilbereich des Gassackabschnittes möglich ist. Es soll verhindert werden, daß das Gas einfach vertikal durch den Gassackabschnitt strömt.

Vorzugsweise überdeckt der Teilbereich des Gassackabschnittes, in dem eine durchgehende vertikale Gasströmung möglich ist, weniger als die Hälfte der von dem umlaufenden Randbereich definierten Grundfläche des Gassackabschnittes.

Weitere Merkmale und Vorteile der Erfindung werden bei der nachfolgenden Beschreibung von Ausführungsbeispielen anhand der Figuren deutlich werden.

Es zeigen:
- Fig. 1 -: eine Ansicht der seitlichen Karosserie eines Kraftfahrzeugs im Bereich der Fensterscheiben mit einer schematischen Darstellung eines Gassackes, der dem Schutz des Kopf-Schulter-Bereiches im Fahrzeug befindlicher Insassen dient;
- Fig. 2 -: eine Abwandlung des Gassackes aus Fig. 1, wobei der Gassack zwei aufblasbare Abschnitte aufweist, die derart gestaltet sind, daß der Gasstrom beim Aufblasen des Gassackes zunächst entlang des äußeren Randes des jeweiligen Abschnittes strömt;
- Fig. 3 -: eine Abwandlung des Gassackes aus Fig. 2, wobei der Gassack drei aufblasbare Abschnitte aufweist;

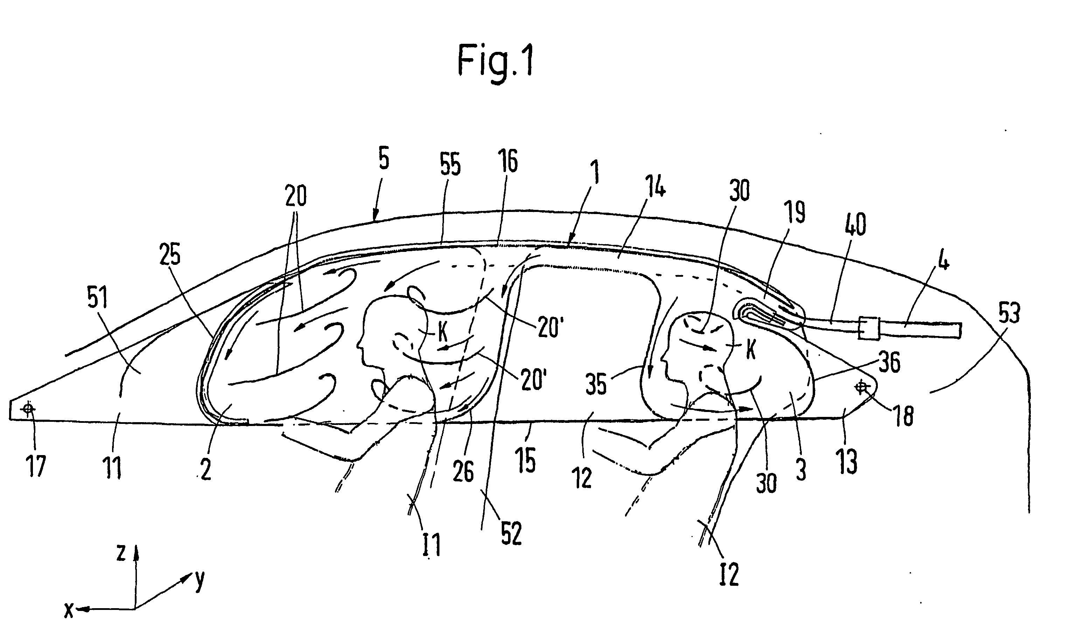

Figur 1 zeigt eine Ansicht der seitlichen Karosserie 5 eines Kraftfahrzeugs im Bereich der seitlichen Fensterscheiben. Insbesondere sind dargestellt, die A-Säule 51, die B-Säule 52, die C-Säule 53 sowie der dachseitige Abschnitt 55 des Türrahmens im Bereich der vorderen und hinteren Seitentür. Am dachseitigen Abschnitt 55 des Türrahmens ist ein Gassack 1 befestigt, der zwei in Fahrzeuglängsrichtung (x) voneinander beabstandete aufblasbare Abschnitte 2, 3 aufweist, die sich in Fig. 1 im aufgeblasenen Zustand befinden.

Im aufgeblasenen Zustand bildet der Gassack 1 einen Vorhang, der sich von der A-Säule 51 bis zur C-Säule 53 der Fahrzeugkarosserie erstreckt, so daß von dem Gassack 1 insbesondere das vordere und hintere Seitenfenster sowie die B-Säule 52 überdeckt werden. Dabei deckt der vordere aufblasbare Abschnitt 2 des Gassackes 1 das vordere Seitenfenster und die B-Säule 52 ab und der hiervon beabstandete hintere aufblasbare Abschnitt 3 des Gassackes 1 Teile des hinteren Seitenfensters. Die beiden aufblasbaren Abschnitte 2, 3 des Gassackes 1 dienen vor allem dem Schutz des Kopfbereiches K sowie des Schulterbereiches eines vorderen Insassen I1, dessen Kopf sich neben dem vorderen Seitenfenster befindet, sowie eines hinteren Fahrzeuginsassen I2, dessen Kopf sich neben dem hinteren Seitenfenster befindet.

Zum Aufblasen des Gassackes 1 ist ein im Bereich der C-Säule 53 angeordneter Gasgenerator 4 mit einem Einblasrohr 40 vorgesehen, dem ein Einblasmund 19 im oberen Bereich des Gassackes 1, d.h. unmittelbar unterhalb des dachseitigen Abschnittes 55 des Türrahmens zugeordnet ist.

Der Gassack 1 selbst besteht aus einem einteiligen Gewebezuschnitt, der zur Bildung einer Gassackhülle entlang einer Umschlagkante, die den unteren Rand 15 des Gassackes 1 bildet, umgelegt worden ist, so daß zwei einander gegenüberliegende Gewebelagen gebildet werden, die im Bereich der Umschlagkante 15 einstückig miteinander verbunden sind. Die beiden Gewebelagen, die die Hülle des Gassackes 1 bilden, sind entlang einer oberen Naht 15, einer vorderen seitlichen Naht 25 sowie einer hinteren seitlichen Naht 36 derart miteinander vernäht, daß ein umlaufender äußerer Rand 15, 16, 25, 36 des Gassackes 1 gebildet wird, der sich aus der Umschlagkante 15 sowie den besagten Nähten 16, 25, 36 zusammensetzt.

Durch zwei weitere Nähte 26, 35, die im wesentlichen senkrecht zur Umschlagkante 15 verlaufen, wird der Gassack 1 in zwei aufblasbare Abschnitte 2, 3 unterteilt, die jeweils einen umlaufenden Rand 15, 26, 16, 25 bzw. 15, 36, 16, 35 aufweisen und die über einen Kanal 14 miteinander verbunden sind. Diese beiden aufblasbaren Abschnitte 2, 3 dienen - wie oben bereits erwähnt - zum Schutz des Kopfbereiches K sowie des Schulterbereiches eines vorderen Fahrzeuginsassen I1 bzw. eines hinteren Fahrzeuginsassen I2.

Zwischen den beiden Gassackabschnitten 2, 3 verläuft ein nicht aufblasbarer Gewebebereich 12. Vor dem vorderen aufblasbaren Abschnitt 2 erstreckt sich ein vorderer Gewebebereich 11, der der Befestigung des Gassackes 1 an der Fahrzeugkarosserie im Bereich der A-Säule 51 dient. Hierfür ist dieser Gewebebereich 11 mit einer entsprechenden Befestigungsstelle 17 versehen. An den hinteren aufblasbaren Abschnitt 3 des Gassackes 1 schließt sich ein hinterer Gewebebereich 13 an, der der Befestigung des Gassackes 1 an der Fahrzeugkarosserie im Bereich der C-Säule 53 dient, wozu ebenfalls eine entsprechende Befestigungsstelle 18 an diesem Gewebebereich 13 vorgesehen ist.

Sowohl in dem vorderen aufblasbaren Abschnitt 2 des Gassackes 1 als auch in dem hinteren aufblasbaren Abschnitt 3 erstrecken sich Abnäher 20, 20' bzw. 30, die im wesentlichen in Fahrzeuglängsrichtung x verlaufen. Entlang dieser Abnäher 20 sind die beiden Gewebelagen des Gassackes 1, von denen die eine der Fahrzeugkarosserie und die andere dem Fahrzeuginnenraum bzw. dem Insassen zugewandt ist, miteinander verbunden.

Die Ausbildung und Anordnung der Abnäher 20, 20' in dem vorderen Abschnitt 2 bzw. der Abnäher 30 in dem hinteren Abschnitt 3 des Gassackes 1 ist derart, daß der Gasstrom (in Fig. 1 durch Pfeile symbolisiert) der von der Dachseite her in den jeweiligen Gassackabschnitt 2, 3 eintritt, entlang des äußeren Randes 16, 25, 15, 26 bzw. 16, 35, 15, 36 des jeweiligen Abschnittes 2, 3 des Gassackes 1 strömen kann. Die im wesentlichen in Fahrzeuglängsrichtung x verlaufenden Abnäher 20, 20' bzw. 30 bilden dabei eine innere Begrenzung des Gasstromes. Anhand des vorderen aufblasbaren Abschnittes 2 wird dabei deutlich, daß der Gasstrom nicht zwingend durchgängig entlang einer Richtung (im Uhrzeigersinn oder entgegen dem Uhrzeigersinn) entlang des äußeren Randes 16, 25, 15, 26 des Abschnittes 2 verlaufen muß. Vielmehr können auch zwei Gasströmungen entlang des äußeren Randes aufeinander zuströmen.

Ferner wird deutlich, daß nicht der gesamte Gasstrom entlang des äußeren Randes geleitet wird. Ein Teil des Gasstromes verläuft stattdessen in Fahrzeuglängsrichtung zwischen den Abnähern 20, 20' bzw. 30.

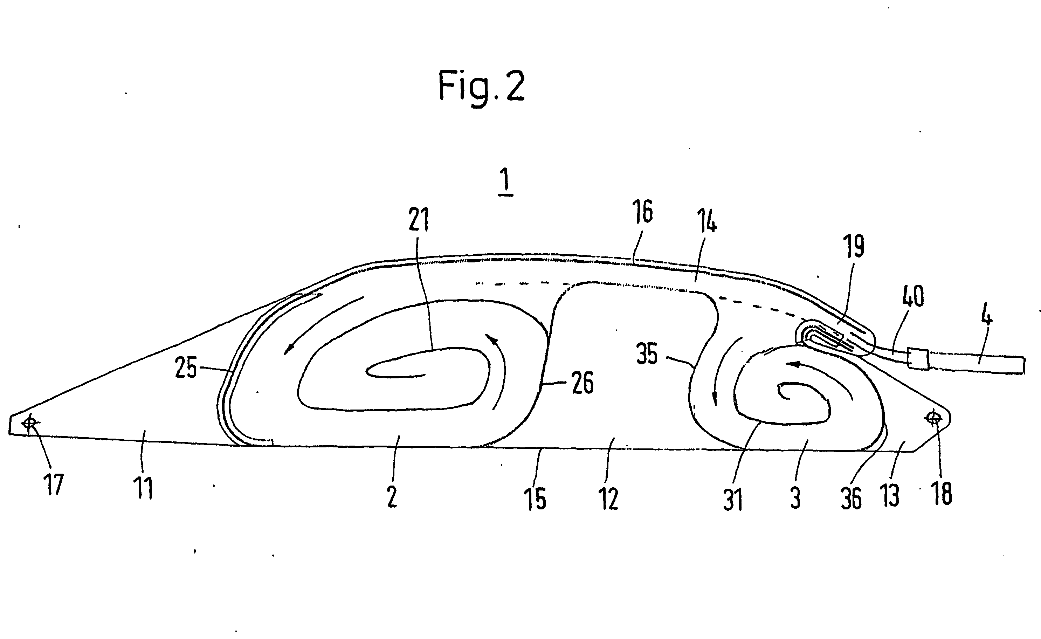

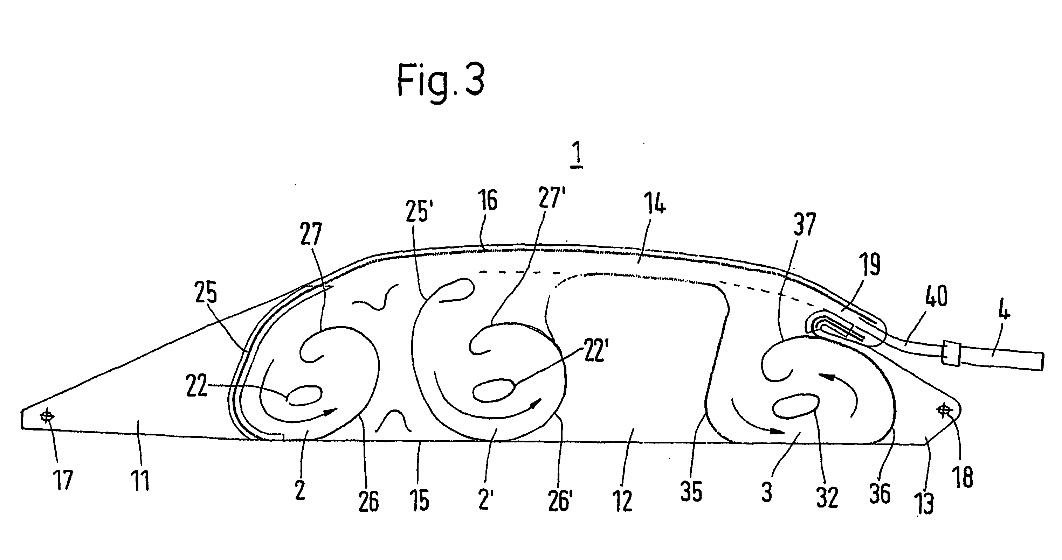

In den Figuren 2 und 3 sind verschiedene Abwandlungen des Gassackes 1 aus Figur 1 dargestellt. Hierbei geht es im wesentlichen um die Gestaltung der Abnäher innerhalb des vorderen bzw. hinteren Gassackabschnittes 2, 3. Nur auf diese wird daher im folgenden näher eingegangen. Im übrigen stimmen die in den Figuren 2 bis 5 dargestellten Gassäcke mit dem in Figur 1 gezeigten Gassack überein.

In dem Ausführungsbeispiel gemäß Figur 2 verlaufen die Abnäher 21, 31 in dem vorderen bzw. hinteren Abschnitt 2, 3 des Gassackes 1 jeweils spiralförmig. Hierdurch wird eine spiralförmige Gasströmung erzeugt, die von außen nach innen verläuft. Die beiden aufblasbaren Abschnitte 2, 3 des Gassackes 1 werden also jeweils zunächst entlang ihres äußeren Randes 16, 25, 15, 26 bzw. 16, 35, 15, 36 aufgeblasen. Erst danach füllt sich dann der zentrale Bereich des jeweiligen aufblasbaren Abschnittes.

Bei dem Ausführungsbeispiel gemäß Figur 3 sind zwei hintereinander angeordnete vordere aufblasbare Abschnitte' 2, 2' und ein hinterer aufblasbarer Abschnitt 3 vorgesehen. Dementsprechend sind zwei zusätzliche vordere seitliche Begrenzungswände (Begrenzungsnähte 25', 26') zur Bildung des zweiten vorderen Gassackabschnittes 2' vorgesehen.

Die hinteren seitlichen Begrenzungsnähte 26, 26', 36 der aufblasbaren Abschnitte 2, 2' bzw. 3 weisen jeweils einen in Fahrzeugslängsrichtung nach vorne verlaufenden Fortsatz 27, 27' bzw. 37 auf. Außerdem ist in jedem der aufblasbaren Abschnitte 2, 2', 3 ein ringförmiger innerer Abnäher 22, 22' bzw. 32 vorgesehen.

Durch diese Gestaltung der Nähte bzw. Abnäher wird eine umlaufende, geschlossene Gasströmung ermöglicht. Hierbei dient der jeweilige Fortsatz 27, 27', 37 der hinteren Begrenzungsnaht 26, 26', 36 der aufblasbaren Abschnitte 2, 2', 3 jeweils sowohl als innere Begrenzung, und zwar im Einströmbereich des jeweiligen aufblasbaren Abschnittes, als auch als äußere Begrenzung für den ringförmig im jeweiligen Gassackabschnitt verlaufenden Gasstrom.

## Patentansprüche

1. Schutzeinrichtung für ein Kraftfahrzeug mit einem Gassack, von dem mindestens ein Abschnitt zum Schutz eines im Fahrzeuginnenraum befindlichen Insassen aufblasbar ist, wobei
a) der aufblasbare Abschnitt des Gassackes durch zwei entlang eines umlaufenden Randes miteinander verbundene Gewebelagen gebildet wird,
b) der Gassack zur Bildung eines Vorhanges neben mindestens einer Fensterscheibe des Kraftfahrzeugs eingerichtet ist, so daß die eine Gewebelage der Fensterscheibe und die andere Gewebelage dem Fahrzeuginnenraum zugewandt ist, und
c) die beiden Gewebelagen zusätzlich außerhalb des Randes miteinander verbunden sind,
und mit mindestens einem Gasgenerator zum Aufblasen des Gassackes durch Einleiten eines Gasstromes in den aufblasbaren Abschnitt,
wobei die Verbindungsstellen (20, 20', 30; 21, 31; 22, 27, 22', 27', 32, 37; 23, 23', 33; 24, 24', 34), an denen die Gewebelagen zusätzlich miteinander verbunden sind, derart angeordnet und ausgebildet sind, daß zumindest ein Teil des zum Aufblasen des Gassackes (1) eingeleiteten Gasstromes entlang des umlaufenden Randes (16, 25, 15, 26; 16, 25', 15, 26'; 16, 35, 15, 36) geleitet werden kann, und
**dadurch gekennzeichnet,**
**daß**
der Teil des Gastromes entlang einer spiralförmigen Bahn geleitet wird.

2. Schutzeinrichtung nach Anspruch 1, **dadurch gekennzeichnet, daß** zumindest ein Teil des Gasstromes entlang einer ringförmigen Bahn geleitet wird, die nach außen durch den umlaufenden Rand (16, 25, 15, 26; 16, 25', 15, 26'; 16, 35, 15, 36) und nach innen durch die zusätzlichen Verbindungsstellen (20, 20', 30; 21, 31; 22, 27, 22', 27', 32, 37; 23, 23', 33; 24, 24', 34) begrenzt ist.

3. Schutzeinrichtung nach Anspruch 2, **dadurch gekennzeichnet, daß** die zusätzlichen Verbindungsstellen (20, 20', 30; 21, 31; 22, 27, 22', 27', 32, 37) eine linienartige innere Begrenzung des Gasstromes bilden.

4. Schutzeinrichtung nach Anspruch 2, **dadurch gekennzeichnet, daß** die zusätzlichen Verbindungsstellen (23, 23', 33; 24, 24', 34) eine innere Begrenzung des Gasstromes bilden, die mehrere voneinander beabstandete Abschnitte umfaßt, an denen die beiden Gewebelagen miteinander verbunden sind.

5. Schutzeinrichtung nach einem der vorhergehenden Ansprüche, **dadurch gekennzeichnet, daß** der Teil des Gasstromes entlang einer geschlossenen Bahn geleitet wird.

6. Schutzeinrichtung nach einem der vorhergehenden Ansprüche, **dadurch gekennzeichnet, daß** die beiden Gewebelagen entlang des umlaufenden Randes (16, 25, 15, 26; 16, 25', 15, 26'; 16, 35, 15, 36) einstückig und/oder über Befestigungsmittel, insbesondere über Nähte, miteinander verbunden sind.

7. Schutzeinrichtung nach einem der vorhergehenden Ansprüche, **dadurch gekennzeichnet, daß** die beiden Gewebelagen an den zusätzlichen Verbindungsstellen (20, 20', 30; 21, 31; 22, 27, 22', 27', 32, 37; 23, 23', 33; 24, 24', 34) über Nähte oder über Fangbänder miteinander verbunden sind.

8. Schutzeinrichtung nach einem der vorhergehenden Ansprüche, **dadurch gekennzeichnet, daß** der Gassack (1) mindestens zwei voneinander beabstandete aufblasbare Abschnitte (2, 2', 3) aufweist.

9. Schutzeinrichtung nach einem der vorhergehenden Ansprüche, **dadurch gekennzeichnet, daß** der Gassack (1) zur Befestigung entlang des dachseitigen Randes (55) eines Türrahmens vorgesehen ist.

10. Schutzeinrichtung nach Anspruch 9, **dadurch gekennzeichnet, daß** der Gasstrom mittels des Gasgenerators (4) von der Dachseite her in den Abschnitt (2, 2', 3) des Gassackes (1) eingeleitet wird.

11. Schutzeinrichtung nach Anspruch 9 oder 10, **dadurch gekennzeichnet, daß** die zusätzlichen Verbindungsstellen (20, 20', 30; 21, 31; 22, 27, 22', 27', 32, 37; 23, 23', 33; 24, 24', 34) derartig ausgebildet und angeordnet sind, daß eine geradlinige, vertikale Gasströmung von dachseitigen Randbereich (16) des Abschnittes (2, 2', 3) zum gegenüberliegenden, bodenseitigen Randbereich (15) des Abschnittes (2, 2', 3.) nur in einem Teilbereich des Abschnittes möglich ist.

12. Schutzeinrichtung nach Anspruch 11, **dadurch gekennzeichnet, daß** der Teilbereich weniger als die Hälfte der von dem umlaufenden Randbereich (16, 25, 15, 26; 16, 25', 15, 26'; 16, 35, 15, 36) definierten Grundfläche des Abschnittes (2, 2', 3) überdeckt.

## Claims

1. Protective device for a motor vehicle having an airbag, at least one section of which can be inflated in order to protect a vehicle occupant located in the interior of a vehicle,
a) the inflatable section of the airbag being formed by two layers of woven fabric which are connected to one another along a peripheral edge,
b) the airbag being configured so as to form a curtain next to at least one window pane of the motor vehicle so that the one layer of woven fabric faces the window pane and the other layer of woven fabric faces the interior of the vehicle, and
c) the two layers of woven fabric being additionally connected to one another outside the edge,
and having at least one gas generator for inflating the airbag by introducing a flow of gas into the inflatable section, the connecting points (20, 20', 30; 21, 31; 22, 27, 22', 27', 32, 37; 23, 23', 33; 24, 24', 34) at which the layers of woven fabric are additionally connected to one another being arranged and embodied in such a way that at least a part of the flow of gas which is introduced in order to inflate the airbag (1) can be directed along the peripheral edge (16, 25, 15, 26; 16, 25', 15, 26'; 16, 35, 15, 36), and **characterized in that** the part of the flow of gas is directed along a helical path.

2. Protective device according to Claim 1, **characterized in that** at least a part of the flow of gas is directed along an annular path which is limited on the outside by the peripheral edge (16, 25, 15, 26; 16, 25', 15, 26'; 16, 35, 15, 36) and on the inside by the additional connecting points (20, 20', 30; 21, 31; 22, 27, 22', 27', 32, 37; 23, 23', 33; 24, 24', 34).

3. Protective device according to Claim 2, **characterized in that** the additional connecting points (20, 20', 30; 21, 31; 22, 27, 22', 27', 32, 37) form a linear internal limitation of the flow of gas.

4. Protective device according to Claim 2, **characterized in that** the additional connecting points (23, 23', 33; 24, 24', 34) form an internal limitation of the flow of gas, which limitation comprises a plurality of sections which are spaced apart from one another and at which the two layers of woven fabric are connected to one another.

5. Protective device according to one of the preceding claims, **characterized in that** the part of the flow of gas is directed along a closed path.

6. Protective device according to one of the preceding claims, **characterized in that** the two layers of woven fabric are connected to one another along the peripheral edge (16, 25, 15, 26; 16, 25', 15, 26'; 16, 35, 15, 36) in one piece and/or using attachment means, in particular using seams.

7. Protective device according to one of the preceding claims, **characterized in that** the two layers of woven fabric are connected to one another at the additional connecting points (20, 20', 30; 21, 31; 22, 27, 22', 27', 32, 37; 23, 23', 33; 24, 24', 34) using seams or using straps.

8. Protective device according to one of the preceding claims, **characterized in that** the airbag (1) has at least two inflatable sections (2, 2', 3) which are spaced apart from one another.

9. Protective device according to one of the preceding claims, **characterized in that** the airbag (1) is provided for attachment along the roof-side edge (55) of a door frame.

10. Protective device according to Claim 9, **characterized in that** the flow of gas is introduced from the roof side into the section (2, 2', 3) of the airbag (1) by means of the gas generator (4).

11. Protective device according to Claim 9 or 10, **characterized in that** the additional connecting points (20, 20', 30; 21, 31; 22, 27, 22', 27', 32, 37; 23, 23', 33; 24, 24', 34) are embodied and arranged in such a way that a linear vertical flow of gas is possible from the roof-side edge region (16) of the section (2, 2', 3) to the opposite, bottom-side edge region (15) of the section (2, 2', 3) only in a partial region of the section.

12. Protective device according to Claim 11, **characterized in that** the partial region covers less than half of the base area of the section (2, 2', 3) which is defined by the peripheral edge region (16, 25, 15, 26; 16, 25', 15, 26'; 16, 35, 15, 36).

## Revendications

1. Dispositif de protection pour automobile avec un sac à gaz, à partir duquel au moins un segment peut être gonflé pour la protection d'un voyageur se trouvant dans l'habitacle de l'automobile, sachant que
a) le segment gonflable du sac à gaz est formé de deux couches de tissu reliées l'une à l'autre le long d'une bordure de circulation,
b) le sac à gaz est dirigé pour former un rideau à côté au moins d'une vitre de fenêtre de l'automobile, de telle manière que l'une des couches de tissu soit tournée vers la vitre de la fenêtre et que l'autre couche de tissu soit tournée vers l'intérieur de l'habitacle de l'automobile, et
c) les deux couches de tissu sont reliées l'une à l'autre en plus à l'extérieur de la bordure,
et avec au moins un générateur de gaz pour gonfler le sac à gaz, en introduisant un courant de gaz dans le segment gonflable, les points de raccordement (20, 20', 30 ; 21, 31 ; 22, 27, 22', 27', 32, 37 ; 23, 23', 33 ; 24, 24', 34), sur lesquels les couches de tissu sont reliées en plus l'une à l'autre, étant disposés et configurés de manière à ce qu'au moins une partie du courant de gaz introduit pour gonfler le sac à gaz (i) puisse être guidée le long de la bordure de circulation (16, 25, 15, 26 ; 16, 25', 15, 26' ; 16, 35, 15, 36), et **caractérisé en ce que** la partie du courant de gaz est guidée le long d'un rail en spirale.

2. Dispositif de protection selon la revendication 1, **caractérisé en ce qu'**au moins une partie du courant de gaz est guidée le long d'un rail en forme d'anneau, qui est limité vers l'extérieur par la bordure de circulation (16, 25, 15, 26 ; 16, 25', 15, 26' ; 16, 35, 15, 36) et vers l'intérieur par les points de raccordement supplémentaires (20, 20', 30 ; 21, 31 ; 22, 27, 22', 27', 32, 37 ; 23, 23', 33 ; 24, 24', 34).

3. Dispositif de protection selon la revendication 2, **caractérisé en ce que** les points de raccordement supplémentaires (20, 20', 30 ; 21, 31 ; 22, 27, 22', 27', 32, 37) forment une limitation linéaire intérieure du courant de gaz.

4. Dispositif de protection selon la revendication 2, **caractérisé en ce que** les points de raccordement supplémentaires (23, 23', 33 ; 24, 24', 34) forment une limitation intérieure du courant de gaz, qui comprend plusieurs segments écartés les uns des autres, sur lesquels les deux couches de tissu sont reliées l'une avec l'autre.

5. Dispositif de protection selon l'une des revendications précédentes, **caractérisé en ce que** la partie du courant de gaz est guidée le long d'un rail fermé.

6. Dispositif de protection selon l'une des revendications précédentes, **caractérisé en ce que** les deux couches de tissu sont reliées l'une avec l'autre le long de la bordure de circulation (16, 25, 15, 26; 16, 25', 15, 26' ; 16, 35, 15, 36) d'un seul tenant et/ou par un matériel de fixation, en particulier par des coutures.

7. Dispositif de protection selon l'une des revendications précédentes, **caractérisé en ce que** les deux couches de tissu sont reliées l'une avec l'autre aux points de raccordement supplémentaires (20, 20', 30 ; 21, 31 ; 22, 27, 22', 27', 32, 37 ; 23, 23', 33 ; 24, 24', 34) par des coutures ou des bandes de capture.

8. Dispositif de protection selon l'une des revendications précédentes, **caractérisé en ce que** le sac à gaz (1) présente au moins deux segments gonflables écartés l'un de l'autre (2, 2', 3).

9. Dispositif de protection selon l'une des revendications précédentes, **caractérisé en ce que** le sac à gaz (1) est prévu pour être fixé le long de la bordure côté toit (55) d'un encadrement de porte.

10. Dispositif de protection selon la revendication 9, **caractérisé en ce que** le courant de gaz est guidé dans le segment (2, 2', 3) du sac à gaz (1) au moyen du générateur de gaz (4) depuis le côté du toit.

11. Dispositif de protection selon la revendication 9 ou 10, **caractérisé en ce que** les points de raccordement supplémentaires (20, 20', 30 ; 21, 31 ; 22, 27, 22', 27', 32, 37 ; 23, 23', 33 ; 24, 24', 34) sont configurés et disposés de telle manière qu'un écoulement vertical rectiligne de gaz n'est possible depuis la zone de la bordure côté toit (16) du segment, (2, 2', 3) vers la zone de la bordure opposée côté sol (15) du segment (2, 2', 3) que dans une zone partielle du segment.

12. Dispositif de protection selon la revendication 11, **caractérisé en ce que** la zone partielle recouvre moins de la moitié de la surface de base du segment (2, 2', 3) définie par la zone de bordure de circulation (16, 25, 15, 26 ; 16, 25', 15, 26' ; 16, 35, 15,36).
